# EUROPEAN PATENT SPECIFICATION

(11) **EP 2 655 923 B1**
(45) Date of publication and mention of the grant of the patent: **11.03.2020**
(21) Application number: 11851692.1
(22) Date of filing: 13.09.2011
(51) Int. Cl.: F16G 13/06, F16H 7/08, F16G 13/04

(54) **METHOD AND APPARATUS FOR USE OF CHAIN**
VERFAHREN UND VORRICHTUNG ZUR VERWENDUNG VON KETTEN
PROCÉDÉ ET DISPOSITIF D'UTILISATION DE CHAÎNE

(30) Priority: 20.12.2010 FI 20106342
(43) Date of publication of application: 30.10.2013
(73) Proprietor: Finnchain Oy, 26510 Rauma (FI)
(72) Inventor: TUOMIKOSKI, Pekka, FI-26100 Rauma (FI)
(74) Representative: Kangasmäki, Reijo Holger
(86) International application number: PCT/FI2011/050783
(87) International publication number: WO 2012/085328

(56) References cited:
- EP-A2- 0 479 124
- WO-A1-97/42430
- DE-A1- 19 747 163
- JP-A- 2009 241 022
- JP-A- 2010 043 683
- SE-C- 458 056
- US-A1- 2008 287 239
- US-B1- 6 241 080

## Description

The invention relates to an apparatus for use of chain according to the preamble of the independent claim.

Regarding a traditional chain structure, wherein power transmission of a chain structure is usually transmitted by a drive wheel, the shape of the teeth of which is standardized, a more developed chain structure is previously known e.g. from Finnish patents FI 64707 and FI 101098. The supporting surface of the chain represented in these patents comprises notches existing crosswise in respect to the moving direction to the chain, the notches being during conveying of the chain in cooperation with counterpart surfaces, such as pins or like belonging to the chain wheel. The shaped pieces forming the chain comprise a notch existing crosswise in respect to the moving direction of the chain, the length of the notch corresponding to the width of the shaped piece and being advantageously placed near one of the jointing points of the shaped piece. In this case, when the chain gets bent over the drive wheel, an advantageous lever arm is achieved, thanks to which the chain force influencing the chain structure presses the notches of the chain harder against the pins of the drive wheel. This solution decreases significantly so called skipping. Also thanks to the level arms being formed, the chain structure gets easily loose from the drive wheel on its return side thanks to which a so called non-engagement of the chain is prevented.

The chain structure according to Patent FI 64707 has proved to be significantly better than corresponding earlier solutions, particularly thanks to the lever arms being achieved. In certain purposes, such as in chain structures being used in water refineries, plastics or corresponding non-metallic materials have been exploited because of corrosion and in order to decrease the specific gravity of the chain. In this case, in certain applications there has been found problems, that are caused due to bending forces directed to the chain in the level corresponding the joint pins e.g. because of natural bending of the chain when the chain is being used in such position, that the joint pins are in a vertical position. Due to this, during cooperation between ordinary straight joint pins and corresponding straight counterpart surfaces existing in the shaped pieces, even a small angular alteration causes always that, that the counterpart surfaces of successive shaped pieces are in contact with each other only by one edge thereof. This naturally causes wearing of both the joint pins and the counterpart surfaces, because the surface pressures are very high e.g. when the chain starts to move in such a bent situation as described above.

In patent FI 101098 there has been presented an improvement for the problem above, which is based on that, that bending of the chain essentially along the longitudinal direction of the joint pins is being minimized by taken advantage of joint pins, the cross section of which increases towards one end thereof. When exploiting furthermore advantageously e.g. joint pins, that are continuously conical, the surface pressures may be optimized under all circumstances in a way, that the type of bending of the chain may be even totally eliminated in principle. In addition to that, by exploiting the type of joint pins even mounting of the chain may be eased by the guiding influence of the conical joint pin.

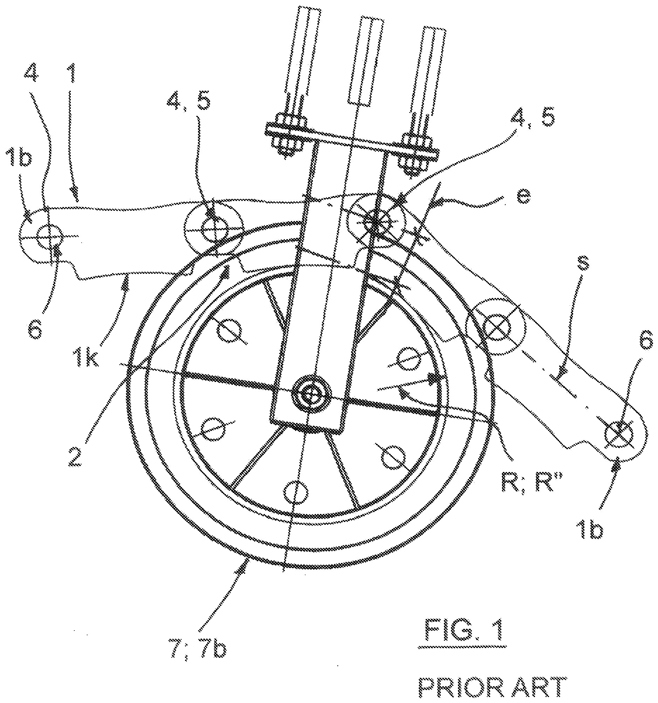

Regarding the very developed as such chain structure described above, there has been, however, found a possibility to improve functioning of the chain particularly when the chain gets bent over a drive wheel or a turning wheel. As can be seen from the enclosed figure 1 presenting prior art, the jointing points between successive formed pieces of the chain raise rather far away from the supporting surface e.g. of a turning wheel, when the chain gets bent over the same. In use of the chain, this causes e.g. thanks to friction and the like reasons vibration due to the fact that the formed pieces tend to, so to say, swing particularly when it is been driven by a drive wheel. In certain operating speeds of the chain, this may even cause resonance.

Furthermore patent application publication JP2009-214022 with a title "Sludge scraper" discloses a chain formed of shaped pieces, having a bent form at one end thereof, in order to enable use of high tension to an endless turning body even if the elongation of the endless turning body is largely increased. With this solution it is not possible to overcome the problems explained above being the reason for the present invention.

The Japanese patent application number JP2010043683A discloses an apparatus according to the preamble of claim 1.

It is an aim of the apparatus according to the present invention to achieve a decisive improvement in the problems presented above and thus to raise substantially the level of knowledge in the field. To achieve this aim, the apparatus according to the invention is primarily characterized by what has been presented in the characterizing part of the independent claim related thereto.

As the most important advantages of the apparatus according to the invention may be mentioned simplicity and reliability of the use and construction of the chain enabled by the same, in which case thanks to the chain vibration being prevented, it is possible to increase remarkably the lifetime of a whole chain drive apparatus. This is due to the fact that a contact surface of mutual supporting surfaces of successive formed pieces forming the chain and a turning wheel or a drive wheel can be efficiently expanded in a way that the jointing points do not cause vibration due to momentum in a corresponding manner as in earlier solutions. The invention is based on shaped pieces that deviate as such in a surprising manner from traditional chain solutions thanks to the jointing parts thereof, being at a deviating angle with respect to the center line defined by the joint pins of the formed pieces. The jointing parts according to the invention enable positioning of the shaped pieces in a wider area over the supporting surface of a turning wheel or a drive wheel than in traditional solutions that is almost by the whole length thereof thanks to the mutual curvatures being united significantly better than in earlier solutions. In the apparatus according to the invention there has been exploited furthermore advantageously e.g. continuously conical joint pins according to the patent FI 101098, which for their part furthermore simultaneously minimize the bending of the chain.

Advantageous embodiments of the apparatus according to the invention are represented in the dependent claims related thereto.

In the following description, the invention is illustrated in detail with reference to the appended drawings, wherein
- Fig. 1: shows as a view from above the bending of a chain according to prior art over a turning wheel,
- Figs 2a - 2d: show in pairs as a view from above and as a side view a single formed piece of a chain operating according to the invention (figures 2a and 2b) and a chain, being formed of corresponding formed pieces (figures 2c and 2d),
- Figs 3a and 3b: show as a view from above the bending of a chain according to the invention over a drive wheel and a cross section along line 3b - 3b from figure 3a,
- Figs 4a and 4b: show as a view from above and as a side view the bending of a chain according to the invention over a turning wheel,
- Figs 5a and 5b: show as a view from above and as a side view the functioning of a chain according to the invention in connection with a guide wheel that has been advantageously exploited in the invention,
- Figs 6a and 6b: show as a view from above and as a side view functioning of a chain according to the invention in connection with a chain tightening device that has been advantageously exploited in the invention,
- In Fig. 7: is shown as a side view an advantageous shaped piece being an alternative to the solution shown e.g. in figure 2a, and
- In Figures 8a and 8b: are shown two alternative chain lines in connection with a drive wheel.

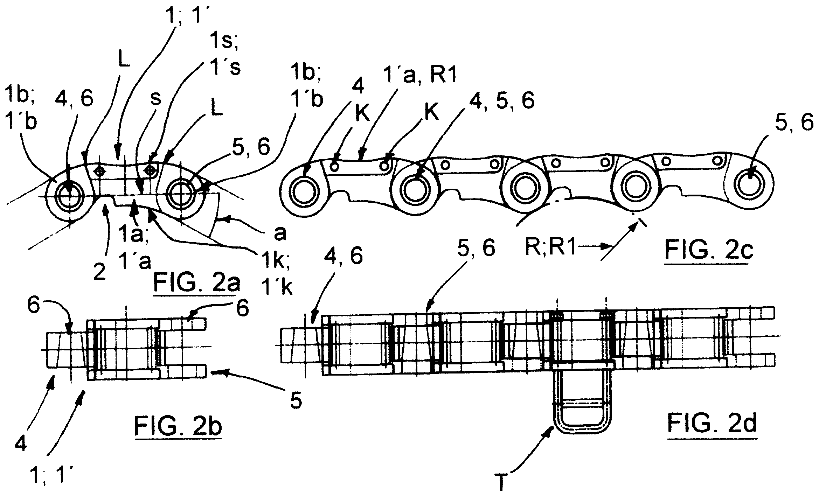

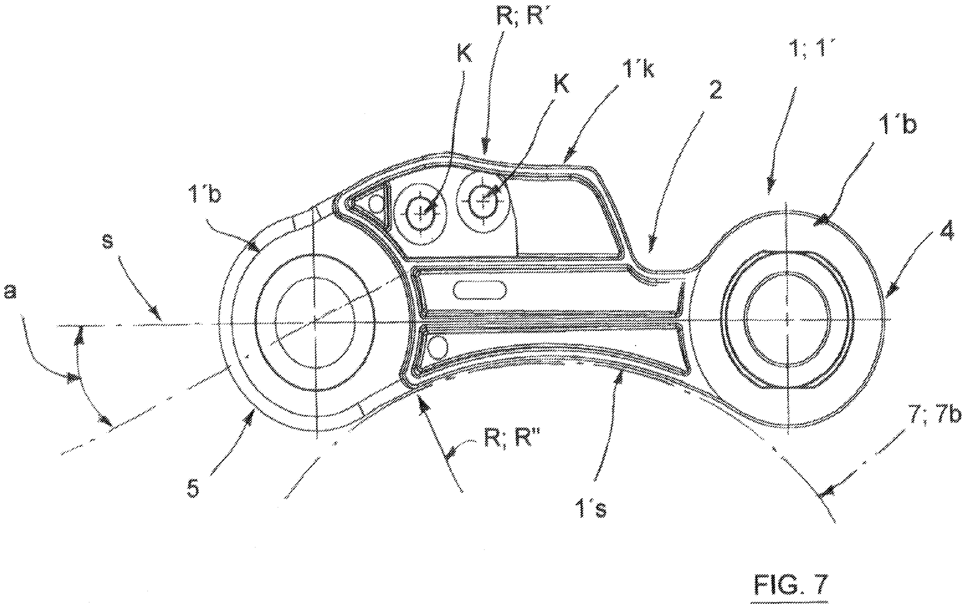

The invention relates to an apparatus for use of chain, the apparatus having a chain, such as a transmission chain, conveyor chain and/or like that is formed of shaped pieces 1, being connected to each other one after another at jointing points 4, 5 in jointing parts 1b, existing at opposite ends of the shaped pieces, by means of joint pins, whereby supporting surfaces 1k existing in middle parts 1a of the shaped pieces 1 comprise, in the same way as in the implementation according to prior art, as shown e.g. in figure 1, notches 2 that are arranged essentially crosswise in respect to the moving direction of the chain and that are during conveying of the chain in cooperation with counterpart surfaces 9, such as pins 9a or like belonging to the chain wheel 7 and being arranged according to the notches 2a and essentially crosswise in respect to the moving direction of the chain, and a drive arrangement, which comprises at least one chain wheel 7, such as a drive wheel, a turning wheel or like, whereby in order to form the jointing points 4, 5 of the said chain, a first jointing point in the jointing parts 1b of each shaped piece 1 is arranged as a uniform projection 4 that is essentially narrower than the width 1 of the shaped piece, and a second one as a fork 5. Within both of the jointing points 4, 5 there exist holes 6, in which case in order to form a chain, each jointing point 4, 5 is to be formed by placing the said projection 4 of a previous shaped piece between the fork of a following shaped piece and by placing a joint pin in the hole 6. The jointing parts 1'b in the shaped pieces 1; 1' forming the chain are arranged according to the advantageous embodiments as shown e.g. in figures 2a - 2d and 7 at a deviating angle a with respect to a center line s defined by the successive joint pins thereof, in order to minimize deviation of the center line s of the chain that gets bent over a drive wheel and/or a turning wheel from a curvature R; R', R" of a drive wheel's and/or a turning wheel's 7a, 7b supporting surface.

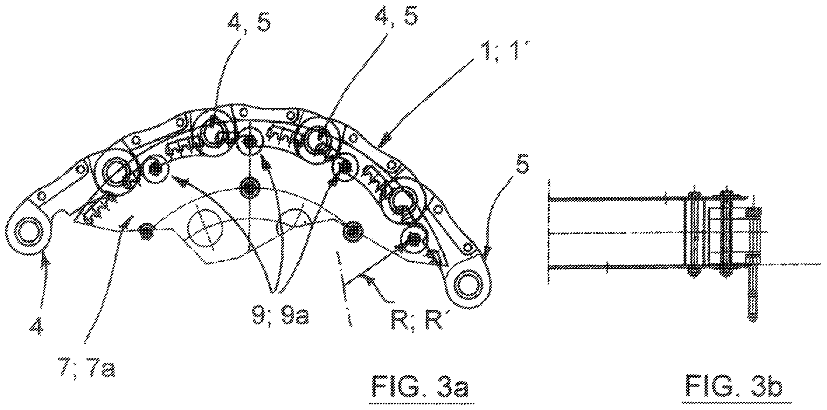

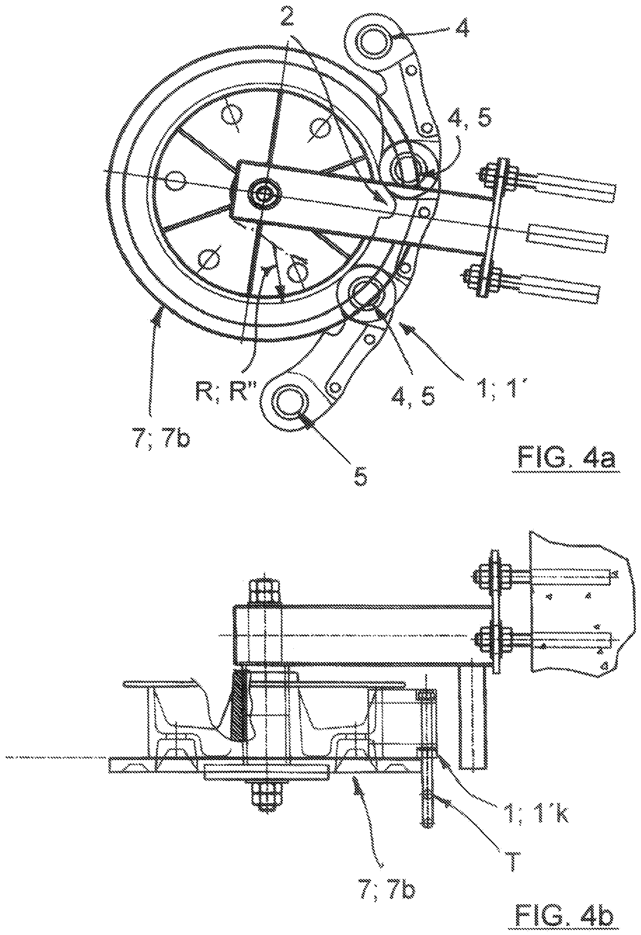

The deviation e of jointing points 4, 5 of shaped pieces 1 in a chain according prior art particularly as shown in figure 1 from a drive wheel's or a turning wheel's support surface can be significantly decreased when applying the apparatus according to the invention, which can be clearly seen by comparing the functioning of the chain according to prior art, as shown in figure 1, to the bending of the chain according to the invention, e.g. as shown in figures 3a, 4a and 7, when the same gets bent over a turning wheel or a drive wheel.

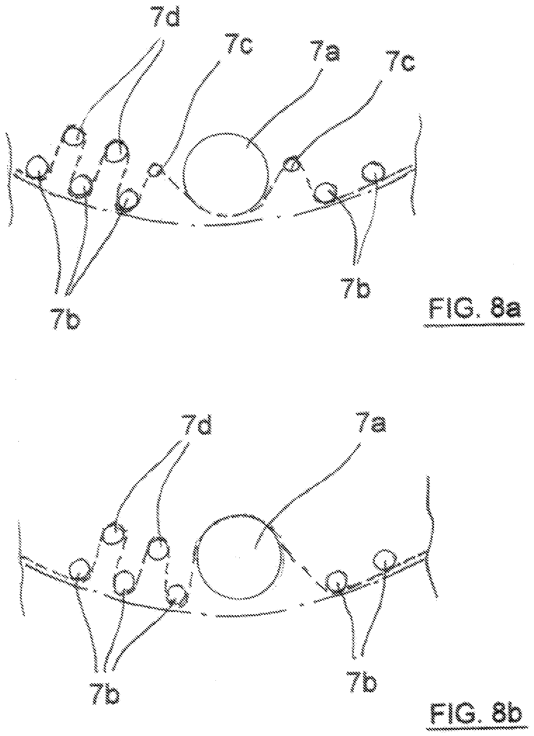

In figure 8a there has been presented a typical chain line in the use of a chain that is formed of shaped pieces as shown e.g. in figure 2a, wherein the jointing parts 1'b are arranged to be directed to the side of the shaped piece 1; 1' with the supporting surfaces 1'k. In this case, passage of the chain is guided first of all by turning wheels 7b in connection with the basin walls by keeping it tightened with tightening wheels 7d. The chain is being guided onto the drive wheels 7a by using guide wheels 7c on opposite sides thereof. This is due to the fact that thanks to the formation of the back surface of the type of shaped piece as shown e.g. in figure 2a, it is most profitably transported over the drive wheels and the turning wheels 7a, 7b on its supporting surface 1'k.

In figure 7 there has been presented instead a shaped piece deviating from the shaped piece shown e.g. in figure 2a, in which the jointing parts 1'b are arranged to be directed to the side of the shaped piece 1; 1' with the back surface 1's. In this case, the shaped piece is aimed to enable, thanks to the stronger curvature of its back surface 1's, particularly a type of the chain line in connection with a drive wheel as shown e.g. in figure 8b, wherein the chain formed of the shaped pieces in question makes possible conveying of the chain by exploiting its back and supporting surfaces 1's, 1'k or in other words, in connection with the turning wheels 7b by the basin edges on its back surface and in connection with the drive wheel 7a naturally on its supporting surface 1'k. In this way, an implementation according to figure 8b, deviating from the implementation of figure 8a, is made possible, in which separate guide wheels 7c need not be exploited in connection with the drive wheel 7a, but instead the chain can be guided directly from the turning wheels 7b onto the same, whereby the angle of the contact surface between the chain and the drive wheel can be even widened.

As an advantageous embodiment of the chain according to the invention, the supporting and back surfaces 1'k, 1's in the middle parts 1'a of the shaped pieces 1; 1' forming the chain join with corresponding surfaces of the jointing parts 1'b with arched joint surfaces L or tangentially on the principle manifesting itself e.g. in figures 2a and 7.

The curvature of the back surface of the shaped piece 1; 1' is arranged as presented in figure 7 advantageously to correspond essentially to the curvature R; R" of the turning wheel 7; 7b.

As a further advantageous embodiment of the chain belonging to the apparatus according to the invention, the back surface 1's of the middle part 1'a of the shaped piece 1' belonging to the chain, is thus arranged arched R1. Furthermore as a further advantageous embodiment, the shaped pieces are provided with fastening means K for coupling of actuator means T to be attached to the chain.

As shown particularly in figures 2a and 7, the notch 2 of a shaped piece 1' belonging to the chain, is arranged to join tangentially with the jointing part thereof 1'b, 4. This enables optimum functioning of the chain in connection with both the drive wheel 7a and the turning wheels or e.g. the guide wheels 7b, 7c as shown e.g. in figures 3a, 3b and 7 , wherein thanks to the totally "arched" shape of the chain's shaped pieces 1', they get pressed in an optimized manner against the drive wheel's drive pins and the periphery of the turning wheel or the guide wheel.

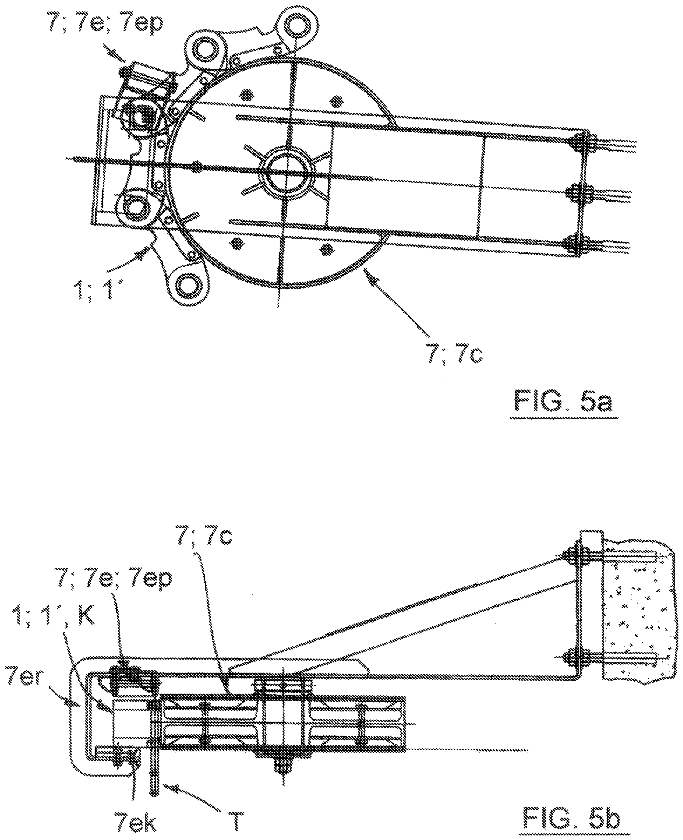

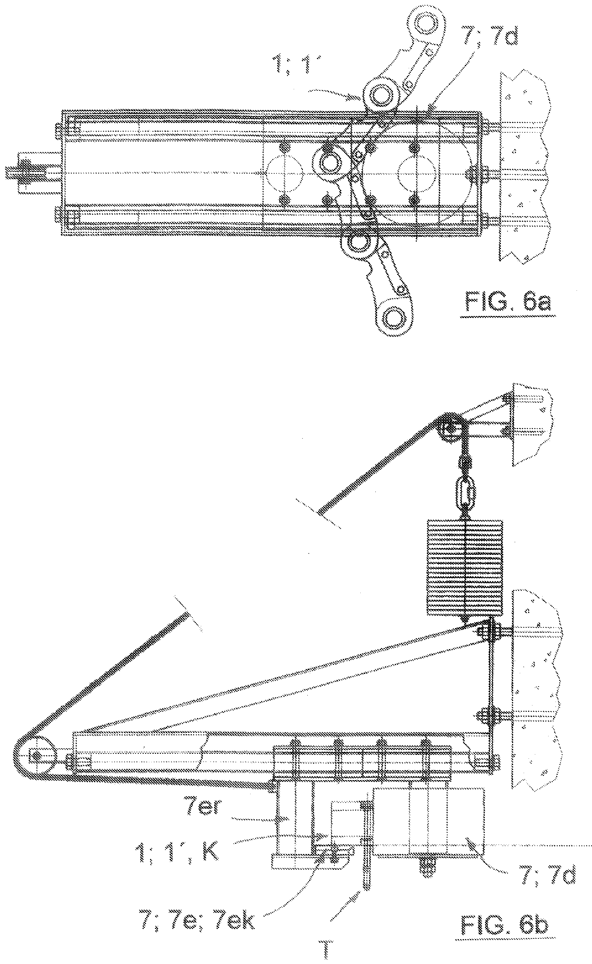

Furthermore as an advantageous embodiment particularly with reference to figures 5a, 5b and 6a, 6b, the drive arrangement comprises a guide wheel 7c and a tightening device 7d that are in contact with the back surface 1's of the shaped pieces 1' forming the chain. The guide wheel 7c is being used as explained earlier when needed e.g. when the passage of the chain onto a turning wheel or a drive wheel is being guided. Respectively, the tightening device 7d, functioning e.g. on counterbalance principle according to figure 6b, is being used for keeping the chain tight along with wearing thereof. For the same purpose in the advantageous embodiment shown in figure 3a, there has been exploited a drive wheel 7a that is provided with drive pins 9a, the mutual distance of the pins being adjustable in order to compensate wearing of the chain by fine adjusting placement of the joint pins of the drive wheel.

As a further advantageous embodiment, the drive arrangement 7 also discloses particularly with reference to figures 5a and 5b an assembly 7e that guides passage of the chain, which comprises one or more press rolls 7ep with plain bearing for adjusting passage height of the chain. This type of a guide can be exploited for guiding passage of a chain e.g. on the principle shown in figure 5a. Particularly with reference to the side views shown in figures 5b and 6b, the guide assembly 7e comprises a slide piece 7ek that is fastened in a frame 7er, which extends on opposite side of the chain with respect to a fastening point of the guide presented in the drawings, which for its part also guides passage of the chain. The slide piece is arranged advantageously as a replaceable wearing piece. Correspondingly the press roll can be arranged to be pressed against the chain e.g. by an adjustable spring force or by gravitation.

It is clear that the invention is not limited to the embodiments presented or described above, but instead it can be modified even to a great extent depending on the operating environment at any given time. It is thus first of all clear that the drive notches in the shaped pieces can be placed in a deviating manner in respect with what has been presented above e.g. in connection with a, so to say, driving jointing part of the shaped piece or in a more centralized manner on the middle part of the supporting surface of the shaped piece. In the invention, it is thus possible and advantageous to exploit a conical joint pin known as such from earlier chain solutions in the jointing parts of the successive shaped pieces, in which context it might be possible also to use in the successive jointing points of the shaped pieces joint pins that expand in opposite directions. It is also possible to manufacture the joint pins e.g. from suitable materials in a way that in the joint pins there are projection arrangements ready that enable some kind of a snap locking etc.

As a further advantageous embodiment, the drive arrangement 7 also discloses particularly with reference to figures 5a and 5b an assembly 7e that guides passage of the chain, which comprises one or more press rolls 7ep with plain bearing for adjusting passage height of the chain. This type of a guide can be exploited for guiding passage of a chain e.g. on the principle shown in figure 5a. Particularly with reference to the side views shown in figures 5b and 6b, the guide assembly 7e comprises a slide piece 7ek that is fastened in a frame 7er, which extends on opposite side of the chain with respect to a fastening point of the guide presented in the drawings, which for its part also guides passage of the chain. The slide piece is arranged advantageously as a replaceable wearing piece. Correspondingly the press roll can be arranged to be pressed against the chain e.g. by an adjustable spring force or by gravitation.

It is clear that the invention is not limited to the embodiments presented or described above, but instead it can be modified even to a great extent depending on the operating environment at any given time. It is thus first of all clear that the drive notches in the shaped pieces can be placed in a deviating manner in respect with what has been presented above e.g. in connection with a, so to say, driving jointing part of the shaped piece or in a more centralized manner on the middle part of the supporting surface of the shaped piece. In the invention, it is thus possible and advantageous to exploit a conical joint pin known as such from earlier chain solutions in the jointing parts of the successive shaped pieces, in which context it might be possible also to use in the successive jointing points of the shaped pieces joint pins that expand in opposite directions. It is also possible to manufacture the joint pins e.g. from suitable materials in a way that in the joint pins there are projection arrangements ready that enable some kind of a snap locking etc.

## Claims

1. Apparatus for use of chain, having a chain, such as a transmission chain, conveyor chain and/or like, that is formed of shaped pieces (1) each having in the middle parts thereof support- (1'k) and back (1's) surfaces, said shaped pieces (1) being connected to each other one after another at jointing points (4, 5) in jointing parts (1b), existing at opposite ends of the shaped pieces, by means of joint pins, whereby in order to form the jointing points (4, 5) of the chain, a first jointing point in the jointing parts (1b) of each shaped piece (1) is arranged as a uniform projection (4) that is essentially narrower than the width (1) of the shaped piece, and a second one as a fork (5), whereby within both of the jointing points (4, 5) there exist holes (6), in which case in order to form a chain, each jointing point (4, 5) is to be formed by placing the said projection (4) of a previous shaped piece between the fork of a following shaped piece and by placing a joint pin in the hole (6), and a drive arrangement, which includes at least one chain wheel (7), such as a drive wheel, a turning wheel or like, whereby supporting surfaces (1k) existing in middle parts (1a) of the shaped pieces (1) comprise notches (2) that are arranged essentially crosswise in respect to the moving direction of the chain and that are during conveying of the chain in cooperation with counterpart surfaces (9), such as pins (9a) or like belonging to the chain wheel (7) and being arranged according to the notches (2a) and essentially crosswise in respect to the moving direction of the chain, and wherein, in order to minimize deviation of the center line (s) of the chain defined by the chain's successive joint pins of each of its shaped pieces (1) while the shaped pieces (1; 1') thereof being bent over the drive wheel (7a) and/or the turning wheel (7b), the support surface (1'k) of the shaped piece (1; 1') has a continuous radius that corresponds to a curvature (R') of the drive wheel's supporting surface, **characterized in that**, both the support surface (1'k) and the back surface (1's) have a continuous radius that corresponds to a curvature (R', R") of the drive wheel's and/or the turning wheel's supporting surface.

2. Apparatus according to claim 1, **characterized in that**, the supporting and back surfaces (1'k, 1's) in the middle parts (1'a) of the shaped pieces (1; 1') forming the chain, join with corresponding surfaces of the jointing parts (1'b) with arched joint surfaces (L) or tangentially.

3. Apparatus according to claim 1 or 2, **characterized in that**, the back surface (1's) of the middle part (1'a) of the shaped piece (1') belonging to the chain, is arranged arched (R1).

4. Apparatus according to any of the preceding claims 1 - 3, **characterized in that**, the notch (2) of a shaped piece (1') belonging to the chain, is arranged to join tangentially with the jointing part thereof (1'b, 4).

5. Apparatus according to any of the preceding claims 1 - 4, **characterized in that**, the drive arrangement comprises a guide wheel (7c) and/or a tightening device (7d) that is/are in contact with the back surface (1's) of the shaped pieces (1') forming the chain.

6. Apparatus according to any of the preceding claims 1 - 5, **characterized in that**, the drive arrangement comprises an assembly (7e) that guides passage of the chain, such as one or more press rolls (7ep), slide pieces (7ek) and/or like.

## Patentansprüche

1. Vorrichtung zur Verwendung von Ketten mit einer Kette, wie beispielsweise einer Antriebskette, Förderkette und/oder dergleichen, die aus Formstücken (1) gebildet ist, die jeweils in ihren Mittelteilen Auflage- (1'k) und Rückflächen (1's) aufweisen, wobei diese Formstücke (1) mittels Gelenkbolzen nacheinander an Gelenkpunkten (4, 5) in an gegenüberliegenden Enden der Formstücke vorhandenen Gelenkteilen (1b) miteinander verbunden sind, wobei zur Bildung der Gelenkpunkte (4, 5) der Kette ein erster Gelenkpunkt in den Gelenkteilen (1b) jedes Formstücks (1) als ein gleichmäßiger Vorsprung (4), der wesentlich schmaler als die Breite (1) des Formstücks ist, und ein zweiter als eine Gabel (5) angeordnet ist, wobei innerhalb der beiden Gelenkpunkte (4, 5) Löcher (6) vorhanden sind, wobei zur Bildung einer Kette jeder Gelenkpunkt (4, 5) gebildet wird, indem der genannte Vorsprung (4) eines vorhergehenden Formstücks zwischen die Gabel eines nachfolgenden Formstücks gesetzt und ein Gelenkbolzen in das Loch (6) geschoben wird, und mit einer Antriebsanordnung, die mindestens ein Kettenrad (7), wie beispielsweise ein Antriebsrad, ein Drehrad oder ähnliches, umfasst, wobei in Mittelteilen (1a) der Formstücke (1) vorhandene Auflageflächen (1k) Aussparungen (2) aufweisen, die im Wesentlichen quer zur Bewegungsrichtung der Kette angeordnet sind und die während des Transports der Kette mit Gegenflächen (9), wie Bolzen (9a) oder dergleichen, die zu dem Kettenrad (7) gehören und entsprechend den Aussparungen (2a) und im Wesentlichen quer zur Bewegungsrichtung der Kette angeordnet sind, zusammenwirken, und bei der, um die Abweichung der Mittellinie (s) der Kette, die durch die aufeinanderfolgenden Gelenkbolzen der Kette jedes ihrer Formstücke (1) definiert ist, zu minimieren, während die Formstücke (1; 1') über das Antriebsrad (7a) und/oder das Drehrad (7b) gekrümmt sind, die Auflagefläche (1'k) des Formstücks (1; 1') einen durchgehenden Radius aufweist, der einer Krümmung (R') der Auflagefläche des Antriebsrads entspricht, **dadurch gekennzeichnet, dass** sowohl die Auflagefläche (1'k) als auch die Rückfläche (1's) einen durchgehenden Radius aufweisen, der einer Krümmung (R', R") der Auflagefläche des Antriebsrades und/oder des Drehrades entspricht.

2. Vorrichtung nach Anspruch 1, **dadurch gekennzeichnet, dass** die Auflage- und Rückflächen (1'k, 1's) in den Mittelteilen (1'a) der die Kette bildenden Formstücke (1; 1') mit bogenförmigen Gelenkflächen (L) oder tangential mit entsprechenden Flächen der Gelenkteile (1'b) verbunden sind.

3. Vorrichtung nach Anspruch 1 oder 2, **dadurch gekennzeichnet, dass** die Rückfläche (1's) des Mittelteils (1'a) des zur Kette gehörenden Formstücks (1') bogenförmig (R1) angeordnet ist.

4. Vorrichtung nach einem der vorstehenden Ansprüche 1 - 3, **dadurch gekennzeichnet, dass** die Aussparung (2) eines zu der Kette gehörenden Formstücks (1') so angeordnet ist, dass sie sich tangential mit dem Gelenkteil (1'b, 4) verbindet.

5. Vorrichtung nach einem der vorstehenden Ansprüche 1 - 4, **dadurch gekennzeichnet, dass** die Antriebsanordnung ein Führungsrad (7c) und/oder eine Spannvorrichtung (7d) umfasst, das/die mit der Rückfläche (1's) der die Kette bildenden Formstücke (1') in Kontakt steht/stehen.

6. Vorrichtung nach einem der vorstehenden Ansprüche 1 - 5, **dadurch gekennzeichnet, dass** die Antriebsanordnung eine Anordnung (7e) umfasst, die den Durchgang der Kette führt, wie beispielsweise eine oder mehrere Andruckrollen (7ep), Gleitstücke (7ek) und/oder dergleichen.

## Revendications

1. Dispositif d'utilisation de chaîne, ayant une chaîne telle que chaîne de transmission, de convoyeur et / ou similaire, composé de pièces formées (1), chacune ayant en sa partie centrale des surfaces porteuses (1'k) et des surfaces arrière (1's), lesdites pièces formées (1) étant connectées entre elles l'une après l'autre à des points d'assemblage (4, 5) dans des éléments d'assemblage (1b), existant aux extrémités opposées des pièces formées, au moyen de chevilles de liaison, où, afin de former les points d'assemblage (4, 5) de la chaîne, un premier point d'assemblage est disposé dans les éléments d'assemblage (1b) de chaque pièce formée (1) en tant que saillie uniforme (4) essentiellement plus étroite que la largeur (1) de la pièce formée, et un second en forme de fourche (5), où dans les deux points d'assemblage (4, 5) existent des trous (6), dans ce cas pour former une chaîne, chaque point d'assemblage (4, 5) devant être formé par la mise en place de ladite saillie (4) d'une pièce formée précédente entre la fourche d'une pièce formée suivante et en plaçant une cheville de liaison dans le trou (6), et d'un dispositif d'entraînement, qui comprend au moins une roue dentée (7), telle qu'une roue d'entraînement, une roue tournante ou similaire, où les surfaces porteuses (1k) existant dans les parties centrales (1a) des pièces formées (1) comprennent des encoches (2) disposées essentiellement transversalement par rapport au sens du mouvement de la chaîne et qui sont pendant le transport de la chaîne en coopération avec les surfaces de contrepartie (9), telles que des chevilles (9a) ou similaire faisant partie de la roue dentée (7) et étant disposées en fonction des encoches (2a) et essentiellement transversalement par rapport au sens du mouvement de la chaîne, et où, pour minimiser la déviation de la ligne centrale (s) de la chaîne définie par les chevilles de liaison successives de la chaîne de chacune de ses pièces formées (1) tandis que ses pièces formées (1; 1') sont penchées sur la roue d'entraînement (7a) et/ou la roue tournante (7b), la surface porteuse (1'k) de la pièce formée (1; 1') a un rayon continu correspondant à la courbure (R') de la surface porteuse de la roue d'entraînement, **caractérisé par le fait que** les deux surfaces porteuses (1'k) et la surface arrière (1's) ont un rayon continu correspondant à la courbure (R', R") de la surface porteuse de la roue d'entraînement et/ou de la roue tournante.

2. Dispositif décrit dans la revendication 1, **caractérisé par le fait que** les surfaces porteuses et arrière (1'k, 1's) dans les parties centrales (1'a) des pièces formées (1; 1') constituant la chaîne, s'assemblent avec les surfaces correspondantes des éléments d'assemblage (1'b) au moyen de surfaces d'assemblage cintrées (L) ou de façon tangentielle.

3. Dispositif décrit dans la revendication 1 ou 2, **caractérisé par le fait que** la surface arrière (1's) de la partie centrale (1'a) de la pièce formée (1') faisant partie de la chaîne est disposée de façon cintrée (R1).

4. Dispositif décrit dans une quelconque des revendications précédentes 1 - 3, **caractérisé par le fait que** l'encoche (2) d'une pièce formée (1') faisant partie de la chaîne est disposée de sorte à s'assembler de façon tangentielle à ses éléments d'assemblage (1'b, 4).

5. Dispositif décrit dans une quelconque des revendications précédentes 1 - 4, **caractérisé par le fait que** le dispositif d'entraînement comprend une roue de guidage (7c) et/ou un moyen de serrage (7d) en contact avec la surface arrière (1's) des pièces formées (1') constituant la chaîne.

6. Dispositif décrit dans une quelconque des revendications précédentes 1 - 5, **caractérisé par le fait que** le dispositif d'entraînement comprend un assemblage (7e) qui guide le passage de la chaîne, tels qu'un ou plusieurs rouleaux presseurs (7ep), pièces coulissantes (7ek) et/ou similaire.
